# EUROPÄISCHE PATENTSCHRIFT

(11) **EP 3 452 425 B1**
(45) Veröffentlichungstag und Bekanntmachung des Hinweises auf die Patenterteilung: **29.04.2020**
(21) Anmeldenummer: 17709934.8
(22) Anmeldetag: 03.03.2017
(51) Int. Cl.: C04B 7/47, C04B 7/52, F27D 17/00, F27D 15/02

(54) **ANLAGE UND VERFAHREN ZUR HERSTELLUNG EINES BINDEMITTELS**
INSTALLATION AND METHOD FOR PRODUCING A BINDER
INSTALLATION ET PROCÉDÉ POUR LA PRÉPARATION D'UN LIANT

(30) Priorität: 04.05.2016 DE 102016207720
(43) Veröffentlichungstag der Anmeldung: 13.03.2019
(73) Patentinhaber: thyssenkrupp Industrial Solutions AG, 45143 Essen (DE); thyssenkrupp AG, 45143 Essen (DE)
(72) Erfinder: WILLMS, Eike, 44309 Dortmund (DE); BRINKMANN, Christian, 33611 Bielefeld (DE); UHDE, Martin, 59320 Ennigerloh (DE)
(74) Vertreter: thyssenkrupp Intellectual Property GmbH
(86) Internationale Anmeldenummer: PCT/EP2017/055024
(87) Internationale Veröffentlichungsnummer: WO 2017/190866

(56) Entgegenhaltungen:
- EP-A2- 0 629 448
- EP-A2- 0 678 487
- US-A- 3 365 521

## Beschreibung

Die Erfindung betrifft eine Anlage und ein Verfahren zur Herstellung eines Bindemittels, insbesondere Zement.

In Zementanlagen werden Kühleinrichtungen üblicherweise eingesetzt, um den aus dem Ofen austretenden gebrannten Zementklinker zu kühlen. Dazu werden beispielsweise Rostkühler eingesetzt. Ein solcher Rostkühler ist in der DE 100 18 142 B4 offenbart. Die EP 0 678 487 A2 offenbart eine Anlage zur Herstellung von Weißzement mit einem Rostkühler. Auch aus der US 3 365 521 A ist ein Rostkühler einer Anlage zur Herstellung von Alkalifreien Zementen bekannt. Beim Betrieb von Rostkühlern sind auf der Oberfläche des zu kühlenden Gutes vielfach rote, noch heißglühende Stellen oder Streifen zu beobachten, deren Ursache in einer ungenügenden Kühlung dieser Bereiche der Kühlgutschicht liegt.

Wird das im vorgeschalteten Ofen gebrannte Gut auf den Kühler abgeworfen, so fallen die gröberen und die feineren Stücke, Grobgut und Feingut, gemeinsam auf die Kühleroberfläche. Das Feingut kühlt verglichen mit dem Grobgut schneller ab und benötigt eine geringere Verweilzeit im Klinkerkühler. Ein Aufschwimmen und/ oder eine zumindest teilweise Fluidisierung des Feinguts führt dazu, dass das Feingut ein wesentlich längere Verweilzeit in dem Kühler aufweist, als zur Abkühlung des Feinguts notwendig wäre. Auch besteht zwischen dem Feingut und dem Grobgut ein starker Temperaturunterschied, wobei das Grobgut eine wesentlich höhere Temperatur als das Feingut aufweist, was zu einer ineffizienten und ungleichmäßigen Kühlung des gesamten Materials führt. Insbesondere ist die Kühlung der groben Stücke bis zum Kern sehr energieaufwändig und ineffizient.

Davon ausgehend ist es Aufgabe der vorliegenden Erfindung, eine Anlage sowie ein Verfahren zur Herstellung eines Bindemittels, insbesondere Zement, mit einer effizienteren Kühlung bereitzustellen.

Diese Aufgabe wird erfindungsgemäß durch eine Anlage mit den Merkmalen des unabhängigen Vorrichtungsanspruchs 1, sowie durch ein Verfahren mit den Merkmalen des unabhängigen Anspruchs 14 gelöst. Vorteilhafte Weiterbildungen ergeben sich aus den abhängigen Ansprüchen.

Eine Anlage zur Herstellung eines Bindemittels, insbesondere Zement, umfasst nach einem ersten Aspekt einen Ofen zur thermischen Behandlung eines Materials und einer in Strömungsrichtung des Materials dem Ofen nachgeschaltete Kühleirichtung zur Kühlung des Materials. Die Kühleinrichtung weist eine Klassierungseinrichtung zum Klassieren des Materials in zumindest zwei Korngrößen, Grobgut und Feingut auf, wobei der Klassierungseinrichtung ein Grobgutkühler zum Kühlen des Grobguts und ein Feingutkühler zum Kühlen des Feinguts nachgeschaltet ist.

Bei dem Ofen handelt es sich beispielsweise um einen Drehrohrofen, in dem das Material zu Zementklinker gebrannt und auf eine Temperatur von etwa 1450°C erhitzt wird. Dem Ofen ist insbesondere ein Vorwärmer vorgeschaltet, wobei das Material in dem Vorwärmer durch das Ofenabgas im Gegenstrom erwärmt wird. Der Vorwärmer weist eine Mehrzahl von Zyklonstufen und beispielsweise einen Calcinatorbereich auf, in dem das Material unter Wärmezufuhr entsäuert wird.

Bei der Klassierungseinrichtung handelt es sich beispielsweise um einen Gasstromsichter, wobei das Material mit einem Gasstrom beaufschlagt wird, sodass das insbesondere flugfähige Feingut von dem insbesondere nicht flugfähigen Grobgut getrennt wird. Beispielsweise umfasst die Klassierungseinrichtung eine senkrechte Rohrleitung, in der das Material im Gegenstrom mit einem Gasstrom beaufschlagt wird, sodass das schwerere Grobgut gegen den Gasstrom und das Feingut mit dem Gasstrom die Rohrleitung verlässt. Die Klassierungseinrichtung kann auch einen dynamischen oder einen statischen Sichter umfassen, in dem das Material in zumindest zwei Korngrößen klassiert wird. Die Klassierungseinrichtung trennt das Material bei einem Trennschnitt von etwa 0,1 mm bis 5mm, vorzugsweise 0,5mm bis 1mm, sodass das Grobgut eine Korngröße aufweist, die größer als 5mm, vorzugsweise größer als 0,5 bis 1 mm, insbesondere größer als 0,1 mm ist. Das Feingut weist eine Korngröße auf, die kleiner als 5 mm, vorzugsweise kleiner als 0,5 bis 1 mm, insbesondere kleiner als 0,1 mm ist.

Insbesondere sind der der Klassierungseinrichtung nachgeschaltete Feingutkühler und der Grobgutkühler parallel zueinander geschaltet, sodass die Kühlung des Feinguts und des Grobguts getrennt voneinander erfolgt. Bei dem Feingutkühler und dem Grobgutkühler handelt es sich um zwei separate Kühleinheiten, wobei das Feingut und das Grobgut mit unterschiedlichen Kühlmethoden auf unterschiedliche Temperaturen abgekühlt werden können.

Eine solche getrennte Kühlung des Feinguts und des Grobguts bietet den Vorteil, dass eine effizientere Kühlung des Grobguts und des Feinguts erfolgt. Das Grobgut weist, ohne das zwischen dem grobkörnigen Material abgelagerte Feingut eine höhere Porosität auf, sodass bei einer Durchströmung des Grobguts mit einem Luftstrom eine effizientere Kühlung des Grobguts stattfindet. Gleichzeitig stellt das Grobgut ohne das Feingut einen geringeren Widerstand für den Luftstrom dar, woraus sich ein geringerer Druckverlust und ein geringerer elektrischen Energieverbrauch ergeben. Die Kühlung des Feinguts getrennt von dem Grobgut hat außerdem den Vorteil einer weitaus geringeren Verweilzeit des Feinguts in dem Gasstrom verglichen mit der Kühlung des Grobguts.

Gemäß einer ersten Ausführungsform weist die Kühleinrichtung einen der Klassierungseinrichtung vorgeschalteten Kühler zum Kühlen des Materials auf. In dem Kühler wird das gesamte Material, sowohl Grobgut als auch Feingut gekühlt. Beispielsweise handelt es sich bei dem Kühler um einen Rostkühler, insbesondere einen Schubrostkühler, wobei das Material auf einem Rost liegend von einem Kühlluftstrom durchströmt wird. Eine Kühlung des Materials vor der Klassierungseirichtung weist den Vorteil auf, dass der Feingutkühler und der Grobgutkühler zur anschließenden Kühlung des Materials kleiner dimensioniert werden können.

Der Feingutkühler umfasst gemäß einer weiteren Ausführungsform einen Wirbelbettkühler und/ oder einen Zyklonkühler. Beispielsweise wird das Schüttgut in einem mindestens einstufigen Wirbelbettkühler gekühlt, indem es durch ein Fluidisationsgas angeströmt wird und in einen Zustand versetzt wird, der oberhalb des Fluidisationspunktes und unterhalb des pneumatischen Transportes liegt. Die hierfür notwendige Geschwindigkeit ist von der Partikelgrößenverteilung, Materialform, Materialdichte bzw. Bettporosität und weiteren Eigenschaften des Materials abhängig.

Ein Wirbelbettkühler umfasst vorzugsweise ein Gehäuse, einen durchströmbaren Boden, der von einem gasförmigen Fluidisations- und Kühlmittel durchströmt wird, Mittel zum Zu- und Abführen eines Schüttgutes, Mittel zum Zu- und Abführen eines oder mehrerer Gasströme. Abhängig von der Integration in die Anlage weisen die Mittel zum Zu- und Abführen von Festoff- und Gasströmen Verschluß-, Steuer- und Regelorgane auf. Im Wirbelbettkühler können zweckmäßigerweise Indirektwärmetauscher integriert oder nachgeschaltet sein, die mit einem Kühlmittel durchströmt werden. Das Kühlmittel kann Teil einer Einrichtung zur Wärmerückgewinnung sein. Teils kann es zweckmäßig sein, das Fluidisationsgas vorzuentstauben, hierfür können der Wirbelbettstufe Zyklone integriert oder nachgeschaltet sein. Abhängig von weiteren prozesstechnischen Randbedignungen können dem Wirbelbettkühler zur Staubabscheidung ebenfalls ein oder mehrere so genannte Drallrohre integriert sein, deren Zweck eine Verbesserung der Staubabscheidung aus der Gasphase ist.

Sofern der Staub relativ hohe Temperaturen aufweist, ist insbesondere eine Kühlung mit einem mehrstufigen Wirbelbettkühler in Kaskadenform sinnvoll, da ähnlich der Kühlung eines feinkörnigen Materials im Flugstrom wie z.B. in einem Zyklonkühler, ein sehr guter Wärmeaustausch erfolgt. Der Feingutkühler kann eine ein- oder mehrstufige Kühlung im fluidisierten Zustand oder im Flugstrom umfassen, wobei ein gasförmiges Kühlmittel ein oder mehrstufig im Kreuzgegenstrom geführt wird.

Ein Zyklonkühler umfasst zumindest einen Zyklon, in den das in dem Gasstrom mitgeführte Feingut geleitet wird. In dem Zyklonkühler wird das Feingut von dem Gasstrom getrennt, wobei ein oder mehrere hintereinander geschaltete Zyklone verwendet werden. Dem Feingutkühler wird insbesondere der Gasstrom der Klassierungseinrichtung zugeführt, wobei dieser vorzugsweise nach dem Austritt aus dem Feingutkühler wieder der Klassierungseinrichtung zugeführt wird.

Gemäß einer weiteren Ausführungsform umfasst der Grobgutkühler einen Festbettkühler, der insbesondere im Kreuz- oder Gegenstrom betreibbar ist. Bei einem insbesondere im Kreuzstrom betriebenen Festbettkühler handelt es sich insbesondere um einen Rostkühler, insbesondere einen Schubrostkühler, wobei das Material auf einem Rost liegend von einem Kühlluftstrom durchströmt wird.

Die Klassierungseinrichtung weist gemäß einer weiteren Ausführungsform zumindest einen Gaseinass zum Einlassen eines Gasstroms in die Klassierungseinrichtung auf. Der Gaseinlass ist derart angeordnet, dass der Gasstrom durch das Material strömt. Vorzugsweise strömt der Gasstrom quer oder entgegen der Strömungsrichtung des Materials. Insbesondere ist der Gasstrom derart ausgebildet, dass das Feingut im Gegensatz zum Grobgut mit dem Gasstrom bewegt wird, wodurch eine Trennung des Feinguts von dem Grobgut erfolgt.

Gemäß einer weiteren Ausführungsform weist die Klassierungseinrichtung mindestens einen Gasabzug zum Abführen des Feinguts in dem Gasstrom aus der Klassierungseinrichtung auf. Das mit dem Gasstrom mitgeführte Feingut wird von dem Gasabzug aus der Klassierungseinrichtung abgeführt. Dies ermöglicht eine weitere Behandlung des Feinguts getrennt vom Grobgut. Insbesondere weist der Gasabzug einen Ventilator zum Abziehen des Feinguts auf. Im Anschluss an den Gasabzug wird das Feingut vorzugsweise von dem Gasstrom getrennt und der Gasstrom insbesondere wieder dem Gaseinlass zugeführt.

Die Klassierungseinrichtung weist zwischen dem Gaseinlass und dem Gasabzug Leitelemente zum Leiten des Materials und/oder des Gasstroms auf. Bei den Leitelementen handelt es sich beispielsweise um Platten, die in einem Winkel zur Strömungsrichtung des Gasstroms mit dem Feingut angeordnet sind. Beispielsweise sind die Leitelemente prismenförmig ausgebildet und weisen einen im Wesentlichen dreieckigen Querschnitt auf. Die Kühleinrichtung weist vorzugsweise eine der Klassierungseinrichtung vorgeschaltete Zerkleinerungseinrichtung, insbesondere einen Brecher auf, wobei die Leitelemente insbesondere im Anschluss an die Zerkleinerungseinrichtung derart angeordnet sind, dass das aus dem Brecher austretende Material auf die Leitelemente trifft.

Die Leitelemente sind optional derart angeordnet, dass die Geschwindigkeit des Gasstroms in Gasströmungsrichtung stromabwärts der Leitelemente erhöht ist. Insbesondere wird die Geschwindigkeit derart erhöht, dass in der Klassierungseinrichtung zwischen dem Gaseinlass und dem Gasabzug eine Separierung des Feinguts von dem Grobgut erfolgt. Dies ermöglicht zum einen eine Reduzierung des Volumenstromes und zum anderen ist eine relativ genaue Ausrichtung der Strömung mittels der Leitelemente möglich, sodass diese entgegen oder quer zur Strömungsrichtung des Materials ausgerichtet ist.

Gemäß einer weiteren Ausführungsform weist die Klassierungseinrichtung zwischen dem Gaseinlass und dem Gasabzug von gasförmigen Medien durchströmbare Mittel, insbesondere Lochbleche, wie perforierte Platten oder mit Spalten versehene Platten auf, die relativ zu der Strömungsrichtung des Gases einen Anstellwinkel aufweisen. Die Mittel weisen insbesondere einen Anstellwinkel zur Horizontalen auf, der oberhalb des Schüttwinkels des Materials liegt, bei Zementklinker also oberhalb von 33-35°. Insbesondere ist eine Mehrzahl von Mitteln vorgesehen, die sich vorzugsweise jeweils zwischen zwei benachbarten Leitelementen erstrecken.

Die Mittel, insbesondere Lochplatten, wie perforierte Platten, sind vorzugsweise im Anschluss an eine Zerkleinerungseinrichtung angeordnet, sodass das von der Zerkleinerungseinrichtung zerkleinerte Material auf die durchströmbaren Mittel fällt. Insbesondere sind diese derart ausgebildet, dass zumindest das Grobgut nicht durch die Mittel hindurch fallen kann. Das Material wird durch die Mittel in einem Winkel zur Horizontalen abgeleitet, sodass das Material durch einen zwischen den Mitteln und einem dazu benachbarten Leitelement ausgebildeten Spalt geleitet wird. Beim Gleiten über die Mittel wird das Material von dem Gasstrom angeströmt, wodurch eine Separation des Feinguts von dem Grobgut erfolgt. Vorteilhafterweise bewirken die Mittel zusammen mit den Leitelementen eine Desagglomeration des Materials in der Klassierungseinrichtung, wodurch die Klassierung zusätzlich vereinfacht wird. Weiterhin wird die Gasströmung durch die Mittel und die zwischen den Mitteln und den Leitelementen ausgebildeten Spalte lokal beschleunigt, sodass die Klassierung mit einem geringeren Energieaufwand durchführbar ist.

Die der Klassierungseinrichtung vorgeschaltete Zerkleinerungseinrichtung, insbesondere der Brecher, ist gemäß einer weiteren Ausführungsform zwischen dem Gaseinlass und dem Gasabzug angeordnet. Die Separation des Feinguts von dem Grobgut erfolgt daher bereits in dem Brecher und stellt eine besonders platzsparende kompakte Lösung dar.

Die Anlage weist gemäß einer weiteren Ausführungsform eine der Klassierungseinrichtung nachgeschaltete Zerkleinerungseinrichtung zur Zerkleinerung des Grobguts auf. Die Zerkleinerungseinrichtung umfasst insbesondere einen Brecher oder eine Mahleinrichtung und eine der Mahleinrichtung nachgeschaltete oder in diese integrierte Sichteinrichtung. Die Mahleinrichtung ist vorzugsweise mit dem Grobgutkühler derart verbunden, dass Material von dem Grobgutkühler in die Mahleinrichtung geleitet wird und wobei die Sichteinrichtung mit dem Feingutkühler derart verbunden ist, dass Material von dem Feingutkühler in die Sichteinrichtung geleitet wird.

Die Erfindung umfasst des Weiteren ein Verfahren zur Herstellung eines Bindemittels, insbesondere Zement, aufweisend zumindest die Schritte: thermisches Behandeln von Material in einem Ofen und Kühlen des Materials in einer Kühleinrichtung, wobei die Kühleinrichtung eine Klassierungseinrichtung umfasst und das Material in der Klassierungseinrichtung in zumindest zwei Korngrößen, Grobgut und Feingut klassiert wird. Im Anschluss an das Klassieren wird das Grobgut in einem Grobgutkühler und das Feingut in einem Feingutkühler gekühlt. Die mit Bezug auf die Anlage beschriebenen Vorteile und Erläuterungen treffen auch in verfahrensmäßiger Entsprechung auf das Verfahren zur Herstellung eines Bindemittels zu.

Das Klassieren erfolgt insbesondere durch einen Gasstrom, sodass das Feingut von dem Grobgut getrennt wird. Die Geschwindigkeit des Gasstroms wird vorzugsweise mittels der Leitelemente erhöht. Das Material wird zumindest teilweise vor dem Klassieren in einer Zerkleinerungseinrichtung, wie beispielsweise einem Brecher zerkleinert. Im Anschluss an die Grobgutkühlung wird das Grobgut in einer Zerkleinerungseinrichtung, insbesondere einer Mahleinrichtung oder einem Brecher zerkleinert und/ oder das Feingut wird im Anschluss an die Feingutkühlung in einer der Zerkleinerungseinrichtung nachgeschalteten Sichteinrichtung zugeführt, wobei das zerkleinerte Grobgut und/ oder das Feingut in Fertiggut und grobes Gut separiert wird und das grobe Gut zusammen mit dem Grobgut in der Mahleinrichtung zerkleinert wird.

### Bevorzugte Ausführungsbeispiele der Erfindung

Die Erfindung ist nachfolgend anhand mehrerer Ausführungsbeispiele mit Bezug auf die beiliegenden Figuren näher erläutert.
- Fig. 1: zeigt ein schematisches Fließdiagramm eines Verfahrens zur Herstellung von Zement gemäß einem Ausführungsbeispiel.
- Fig. 2 bis 5: zeigen schematische Darstellungen einer Klassierungseinrichtung gemäß verschiedener Ausführungsbeispiele.

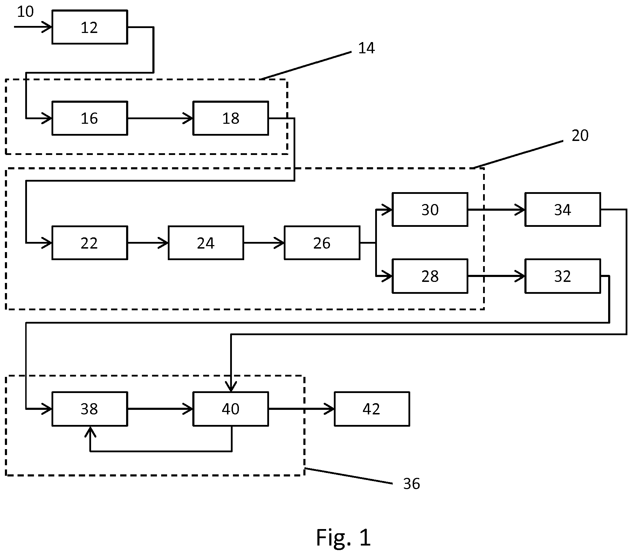

Fig. 1 zeigt ein Fließdiagramm eines Verfahrens zur Herstellung von Zement. Das Rohmaterial 10, wird zunächst in einer Zerkleinerungseinrichtung 12, beispielswiese eine Mühle, wie einer Walzenmühle, einer Vertikalrollenmühle oder einer Kugelmühle, zerkleinert. Anschließend wird das Material einer thermischen Behandlung 14 unterzogen. Die thermische Behandlung umfasst eine Erwärmung des Materials in einem Vorwärmer 16 und einem dem Vorwärmer nachgeschalteten Ofen 18, wobei das Material in dem Vorwärmer durch das Ofenabgas im Gegenstrom erwärmt wird. Der Vorwärmer weist eine Mehrzahl von in Fig. 1 nicht dargestellten Zyklonstufen und beispielsweise einen Calcinatorbereich auf, in dem das Material unter Wärmezufuhr entsäuert wird. In dem Ofen 18 wird das Material thermisch bei Maximaltemperaturen zwischen 1000°C und 1450°C weiterbehandelt, so dass sich hydraulisch aktive Mineralphasen bilden und anschließend in einer Kühleinrichtung 20 gekühlt.

Die Kühleinrichtung 20 umfasst in Strömungsrichtung des Materials einen Kühler 22, einen Brecher 24, eine Klassierungseinrichtung 26, sowie einen Grobgutkühler 28 und einen dazu parallel angeordneten Feingutkühler 30. Im Anschluss an den Ofen 18 wird das Material, insbesondere der Zementklinker, in den Kühler 22 gefördert. Bei dem Kühler 22 handelt es sich beispielsweise um einen Schubrostkühler, einen Trommelkühler, einen Schachtkühler oder einen Wirbelbettkühler.

Im Anschluss an den Kühler 22 wird das Material in dem Brecher 24 gebrochen. Bei dem Brecher handelt es sich beispielsweise um einen Walzenbrecher, Hammerbrecher oder einen Kegelbrecher, wobei das Material nach der Zerkleinerung eine maximale Korngröße von etwa 50 mm aufweist. Das in dem Brecher 24 zerkleinerte Material wird anschließend einer Klassierungseinrichtung 26 zugeführt, in der das Material in zwei Korngröße, Feingut und Grobgut, klassiert wird. Der Trennschnitt der Klassierungseinrichtung erfolgt insbesondere bei 0,1 mm bis 5 mm, vorzugsweise 0,5 mm bis 1 mm, sodass das Grobgut eine Korngröße aufweist, die größer als 5mm, vorzugsweise größer als 0,5 bis 1 mm, insbesondere größer als 0,1 mm ist. Das Feingut weist eine Korngröße auf, die kleiner als 5 mm, vorzugsweise kleiner als 0,5 bis 1 mm, insbesondere kleiner als 0,1 mm ist.

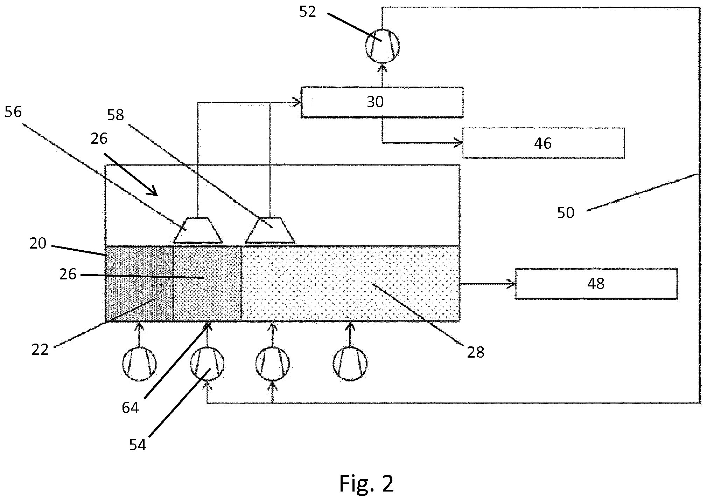

Bei der Klassierungseinrichtung 26 handelt es sich beispielsweise um einen Gasstromsichter, in welchem das Material mit einem Gasstrom beaufschlagt wird, sodass insbesondere das flugfähige Feingut von dem insbesondere nicht flugfähigen Grobgut getrennt wird. Beispielsweise wird das Material in einer senkrechten Rohrleitung im Gegenstrom mit einem Gasstrom beaufschlagt, wobei das schwerere Grobgut gegen den Gasstrom und das Feingut mit dem Gasstrom die Rohrleitung verlässt. Es ist ebenfalls denkbar, die Klassierungseinrichtung 26 als einen dynamischen oder statischen Sichter auszuführen. Weitere Ausgestaltungen der Klassierungseinrichtung 26 sind mit Bezug auf die Figuren 2 bis 5 beschrieben.

Das die Klassierungseinrichtung 26 verlassende Grobgut wird dem Grobgutkühler 28 zugeführt, der der Klassierungseinrichtung 26 nachgeschaltet ist. Der Grobgutkühler 28 umfasst beispielsweise einen Wirbelbettkühler oder einen Festbettkühler, wie beispielsweise einen Schubrostkühler, der mit Kühlluft durchströmt wird. Das die Klassierungseinrichtung 26 verlassende Feingut wird dem der Klassierungseinrichtung nachgeschalteten Feingutkühler 30 zugeführt. Der Feingutkühler 30 ist parallel zu dem Grobgutkühler 28 angeordnet und umfasst beispielsweise einen Wirbelbettkühler oder einen oder mehrere in Reihe geschaltete Zyklonkühler. Auch eine Kombination aus einem Wirbelschichtkühler und einem oder mehreren Zyklonkühler sind möglich. In dem Grobgutkühler 28 und dem Feingutkühler 30 wird das Grobgut und das Feingut jeweils weiter abgekühlt.

Das abgekühlte Grobgut wird mittels einer Grobgutfördereinrichtung 32 zu einer Mahleinrichtung 38 gefördert. Die Mahleinrichtung umfasst beispielsweise eine Kugelmühle oder eine Vertikalrollenmühle, in der das abgekühlte Grobgut zerkleinert wird. Der Mahleinrichtung 38 ist eine Sichteinrichtung 40 nachgeschaltet. Bei der Sichteinrichtung 40 handelt es sich beispielsweise um einen statischen oder einen dynamischen Sichter oder um eine Kombination aus diesen. Das abgekühlte Feingut wird mittels einer Feingutfördereinrichtung der Sichteinrichtung 40 zugeführt, wobei auch eine Zusammenführung von Grob- und Feingut und gemeinsame Aufgabe auf die Mühle denkbar ist. In der Sichteinrichtung 40 wird das Material, insbesondere das Feingut und das mittels der Mühle 38 zerkleinerte Grobgut, in Fertiggut 42 und grobes Sichtgut gesichtet. Beispielsweise ist die Sichteinrichtung 40 in die Mühle 38 integriert, wobei das von der Sichteinrichtung 40 gesichtete grobe Sichtgut zur weiteren Zerkleinerung in die Mühle 38 aufgegeben wird.

Fig. 2 zeigt ein Ausführungsbeispiel einer Klassierungseinrichtung 26 in einem Ausschnitt einer Anlage zur Herstellung von Zement, wobei gleiche Bezugszeichen für die der Fig. 1 entsprechenden Komponenten verwendet wurden. Die Anlage weist eine Kühleinrichtung 20 auf, die beispielsweise einen Wirbelbettkühler oder einen Schubrostkühler umfasst und auf dem durch die schraffierten Bereiche dargestelltes Material zur Kühlung aufliegt. Das Material wird in der Kühleinrichtung 20 in Förderrichtung bewegt, wobei die Förderrichtung in Fig. 2 von links nach rechts verläuft. Die Kühleinrichtung 20 weist einen Kühler 22 auf, der das Material, insbesondere den aus dem Ofen 18 der Fig. 1 ausgetretenen Zementklinker, kühlt. Das in dem Kühler 22 zum Kühlen aufliegende Material umfasst sowohl Grobgut als auch Feingut und wird von Kühlluft quer zur Förderrichtung von unten nach oben durchströmt. Die Kühleinrichtung 20 umfasst eine Mehrzahl von Ventilatoren 54 unterschiedlicher Leistung, die Kühlluft zu einer Mehrzahl von Gaseinlässen leiten, sodass das Material mit dem Gasstrom durchströmt wird. In Förderrichtung schließt sich an den Kühler 22 die Klassierungseinrichtung 26, in dem das Material in der Kühleinrichtung 20 von einem durch den Gaseinlass 64 die Klassierungseinrichtung 26 eintretenden Gasstrom durchströmt wird, der eine höhere Strömungsgeschwindigkeit aufweist als der Gasstrom, der das Material in dem Kühler 22 durchströmt. Die erhöhte Strömungsgeschwindigkeit des Gasstroms sorgt dafür, dass das Feingut von dem Gasstrom erfasst und mit diesem aus der Kühleinrichtung befördert wird. Die Anlage weist des Weiteren einen Gasabzug 56, 58 auf, wobei in Fig. 2 beispielhaft zwei Gasabzüge 56, 58 gezeigt sind. Der Gasabzug 56, 58 ist oberhalb der Klassierungseinrichtung 26 angeordnet, sodass die Klassierungseinrichtung 26 zwischen einem Gaseinlass 64 und dem Gasabzug 56, 58 angeordnet ist. Der Gasabzug 56, 58 umfasst beispielsweise einen Ventilator 52, mittels welchem das Feingut durch den Gasabzug 56, 58 von der Kühleinrichtung 60 abgezogen wird.

In Förderrichtung des zu kühlenden Materials schließt sich an die Klassierungseinrichtung 26 ein Grobgutkühler 28 an. In dem Grobgutkühler 28 wird das Grobgut 48 auf eine Temperatur von weniger als 100°C abgekühlt und verlässt anschließend die Kühleinrichtung 20.

Das Feingut wird durch den Gasabzug 56, 58 zu einem Feingutkühler 30 transportiert, in dem das Feingut auf eine Temperatur von weniger als 100°C abgekühlt wird. Der Feingutkühler 30 umfasst zumindest einen Zyklon- oder Wirbelbettkühler, in dem das Feingut 46 von dem Gasstrom getrennt wird. Der Gasstrom wird im Anschluss an den Feingutkühler über eine Leitung 50 zum Gaseinlass 64 des Klassierungsbereichs 26 geleitet.

Eine Klassierung des Materials vor der vollständigen Abkühlung bietet den Vorteil, dass die getrennte Abkühlung des Feinguts und des Grobguts eine Einsparung des zur Kühlung notwendigen elektrischen Energieaufwands mit sich bringt. Die Kühlung des Feinguts bedingt eine weitaus geringere Verweilzeit verglichen mit der Kühlung des Grobguts. Des Weiteren wird eine Kühlung des Grobguts durch eine Gasströmung erheblich erleichtert, wenn das zwischen den groben Körnern gelegene Feingut von dem Grobgut separiert wurde, weil ein Wärmeübergang der Wärme des Grobguts auf den Gasstrom erheblich vereinfacht wird.

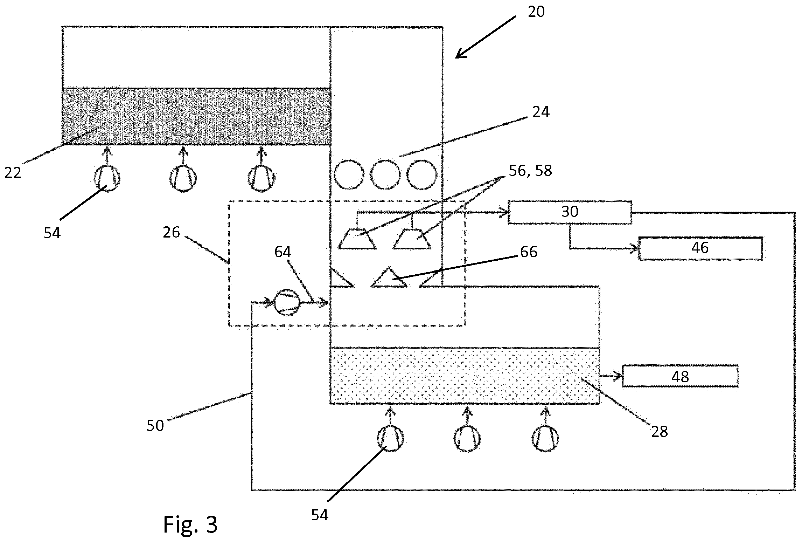

Fig. 3 zeigt ein Ausführungsbeispiel einer Klassierungseinrichtung 26 in einem Ausschnitt einer Anlage zur Herstellung von Zement, wobei gleiche Bezugszeichen für die der Fig. 1 und 2 entsprechenden Komponenten verwendet wurden. Die Anlage weist einen Brecher 24 auf, der im Anschluss an den Kühler 22 zum Kühlen des unklassierten Materials angeordnet ist, sodass das Material nach dem Kühlen in dem Kühler 22 in den Brecher 24 aufgegeben wird. Bei dem Brecher 24 handelt es sich beispielhaft um einen Walzenbrecher mit drei Brechwalzen. Unterhalb des Brechers 24 ist die Klassierungseinrichtung 26 angeordnet, sodass das von dem Brecher 24 zerkleinerte Material schwerkraftbedingt in die Klassierungseinrichtung 26 gelangt. Die Klassierungseinrichtung 26 weist des Weiteren einen Gaseinlass 64 und einen darüber angeordneten Gasabzug 56, 58 auf, wobei der Gasabzug 56, 58 unterhalb des Brechers 24 angeordnet ist. Zwischen dem Gaseinlass 64 und dem Gasabzug 56, 58 sind eine Mehrzahl von Leitelementen 66 angeordnet, die in der Fig. 3 beispielshaft einen dreieckigen Querschnitt aufweisen. Die Leitelemente 66 sind derart angeordnet, dass die Strömungsgeschwindigkeit der aus dem Gaseinlass 64 austretenden Gasströmung durch die Leitelemente 66 erhöht wird. Die Leitelemente 66 sind im Wesentlichen auf einem Höhenniveau relativ zueinander angeordnet, wobei zwischen zwei Leitelementen 66 jeweils Gasdurchlässe gebildet sind. Die Leitelemente 66 sind derart zueinander angeordnet, dass die Gasdurchlässe sich in Strömungsrichtung der Gasströmung, von dem Gaseinlass 64 zu dem Gasabzug 56, 58 erweitert werden, sodass die Gasströmung lokal beschleunigt wird.

Unterhalb der Klassierungseinrichtung 26 ist der Grobgutkühler angeordnet, sodass das in der Klassierungseinrichtung 26 klassierte Grobgut schwerkraftbedingt auf den Grobgutkühler 28 fällt und von diesem gekühlt wird. Das Feingut wird mittels der Gasströmung der Klassierungseinrichtung 26 zu dem Gasabzug 56, 58 und dem Feingutkühler 30 transportiert und von diesem gekühlt. Der Feingutkühler 30 umfasst einen Zyklonkühler, sodass der Gasstrom von dem Feingut separiert wird und der Gasstrom über die Leitung 50 dem Gaseinlass 64 der Klassierungseinrichtung 64 zugeführt wird. Beispielsweise ist in der Leitung 50 eine in den Figuren 2 bis 5 nicht dargestellte Entstaubungseinrichtung zur Entstaubung der Gasströmung angeordnet.

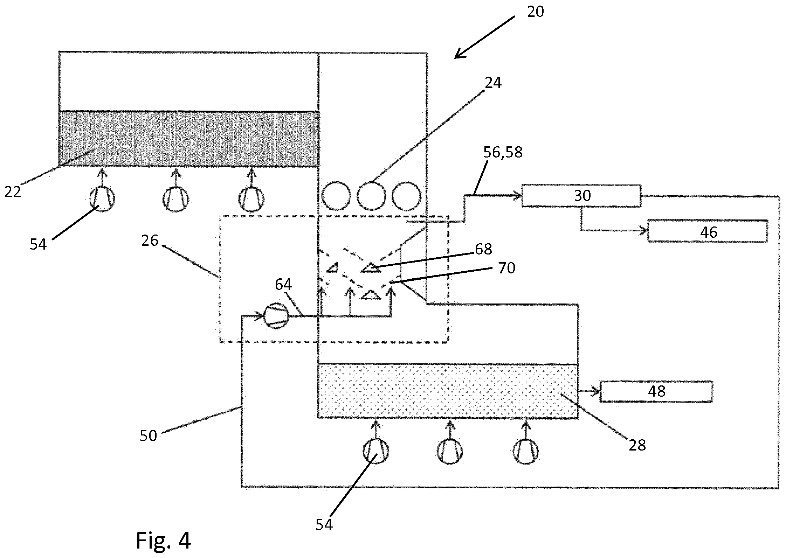

Fig. 4 zeigt ein Ausführungsbeispiel einer Klassierungseinrichtung 26 in einem Ausschnitt einer Anlage zur Herstellung von Zement, wobei die Anlage im Wesentlichen der Anlage der Fig. 3 entspricht. Die Klassierungseinrichtung 26 der Fig. 4 weist im Unterschied zur Fig. 3 eine Mehrzahl von Leitelementen 68 auf, die zueinander versetzt auf zumindest zwei unterschiedlichen Höhenniveaus angeordnet sind. Exemplarisch sind in Fig. 4 drei Leitelemente 68 dargestellt, die jeweils einen im Wesentlichen dreieckigen Querschnitt aufweisen. Des Weiteren ist zwischen dem Gaseinlass 64 und dem Gasabzug 56, 58 eine Mehrzahl von Lochplatten 70 angeordnet. Beispielhaft sind sechs Lochplatten 70 dargestellt, die sich jeweils zwischen zumindest zwei benachbarten Leitelementen 68 erstecken und einen Winkel zur Horizontalen von etwa 45° ausbilden.

Das von dem Brecher in die Klassierungseinrichtung 26 fallende Material wird durch die Lochplatten in einem Winkel zur Horizontalen und zur Fallrichtung abgeleitet, sodass das Material durch einen zwischen den Lochplatten 68 und einem dazu benachbarten Leitelement 68 ausgebildeten Spalt geleitet wird. Durch die Lochplatten 70 wird das Material beim Gleiten über die Lochplatte von unten angeströmt, wodurch eine Separation des Feinguts von dem Grobgut erfolgt. Die Mehrzahl von Lochplatten 70 und Leitelementen 68 bewirkt des Weiteren eine Desagglomeration des Materials in der Klassierungseinrichtung 26, wodurch die Klassierung zusätzlich vereinfacht wird. Weiterhin wird die Gasströmung durch die Lochbleche 70 und die zwischen den Lochblechen und den Leitelementen 68 ausgebildeten Spalte lokal beschleunigt, sodass die Klassierung mit einem geringeren Energieaufwand durchführbar ist.

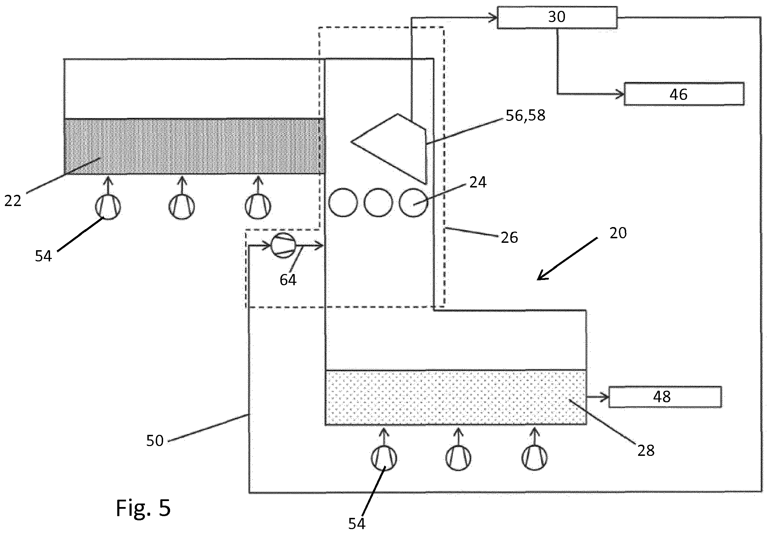

Fig. 5 zeigt ein Ausführungsbeispiel einer Klassierungseinrichtung 26 in einem Ausschnitt einer Anlage zur Herstellung von Zement, wobei die Anlage im Wesentlichen der Anlage der Fig. 3 und 4 entspricht mit dem Unterschied, dass keine Leitelemente und Lochbleche vorgesehen sind. Des Weiteren ist der Gasabzug 56,58 oberhalb des Brechers 24 angeordnet, sodass die Gasströmung von dem Gaseinlass 64 durch den zwischen den Brechwalzen ausgebildeten Brechspalt strömt und in den Gasabzug 56, 58 gelangt. Die Gasströmung wird insbesondere innerhalb der Sieb und Brechspalte lokal beschleunigt, wobei die Separation des Feinguts von dem Grobgut zumindest teilweise in dem Brechspalt stattfindet.

### Bezugszeichenliste

- 10: Rohmaterial
- 12: Zerkleinerungseinrichtung
- 14: thermische Behandlung
- 16: Vorwärmer
- 18: Ofen
- 20: Kühleinrichtung
- 22: Kühler
- 24: Brecher
- 26: Klassierungseinrichtung
- 28: Grobgutkühler
- 30: Feingutkühler
- 32: Fördereinrichtung Grobgut
- 34: Fördereinrichtung Feingut
- 36: Zerkleinerungseinrichtung
- 38: Mahleinrichtung
- 40: Sichter
- 42: Fertiggut
- 46: Feingut
- 48: Grobgut
- 50: Leitung / Mittel zur Gasrückführung
- 52: Ventilator
- 54: Ventilator
- 56: Gasabzug
- 58: Gasabzug
- 60: Kühleinrichtung
- 66: Leitelement
- 68: Leitelement
- 70: Lochplatte

## Patentansprüche

1. Anlage zur Herstellung eines Bindemittels, insbesondere Zement, aufweisend einen Ofen (18) zur thermischen Behandlung eines Materials und eine in Strömungsrichtung des Materials dem Ofen (18) nachgeschaltete Kühleinrichtung (20) zur Kühlung des Materials, **dadurch gekennzeichnet, dass**
die Kühleinrichtung (20) eine Klassierungseinrichtung (26) zum Klassieren des Materials in zumindest zwei Korngrößen, Grobgut und Feingut aufweist, wobei der Klassierungseinrichtung (26) ein Grobgutkühler (28) zum Kühlen des Grobguts und ein Feingutkühler (30) zum Kühlen des Feinguts nachgeschaltet ist.

2. Anlage nach Anspruch 1, wobei die Kühleinrichtung (20) einen der Klassierungseinrichtung (24) vorgeschalteten Kühler (22) zum Kühlen Materials aufweist.

3. Anlage nach einem der vorangehenden Ansprüche, wobei der Feingutkühler (30) einen Wirbelbettkühler und/ oder einen Zyklonkühler umfasst.

4. Anlage nach einem der vorangehenden Ansprüche, wobei der Grobgutkühler (28) einen Festbettkühler umfasst.

5. Anlage nach einem der vorangehenden Ansprüche, wobei die Klassierungseinrichtung (26) zumindest einen Gaseinlass (64) zum Einlassen eines Gasstroms in die Klassierungseinrichtung (26) aufweist.

6. Anlage nach einem der vorangehenden Ansprüche, wobei die Klassierungseinrichtung (26) mindestens einen Gasabzug (56, 58) zum Abführen des Feinguts in dem Gasstrom aus der Klassierungseinrichtung (26) aufweist.

7. Anlage nach Anspruch 5 und 6, wobei die Klassierungseinrichtung (26) zwischen dem Gaseinlass (64) und dem Gasabzug (56, 58) Leitelemente (66, 68) zum Leiten des Materials und/oder des Gasstroms aufweist.

8. Anlage nach einem der Ansprüche 5 bis 7, wobei die Klassierungseinrichtung (26) zwischen dem Gaseinlass und dem Gasabzug von gasförmigen Medien durchströmbare Mittel aufweist, die relativ zu der Strömungsrichtung des Gases einen Anstellwinkel aufweisen.

9. Anlage nach einem der vorangehenden Ansprüche, wobei die Anlage einen der Klassierungseinrichtung (26) vorgeschalteten Brecher (24) aufweist.

10. Anlage nach Anspruch 9, wobei der Brecher (24) zwischen dem Gaseinlass (64) und dem Gasabzug (56, 58) angeordnet ist.

11. Anlage nach einem der vorangehenden Ansprüche, wobei die Anlage eine der Klassierungseinrichtung (26) nachgeschaltete Zerkleinerungseinrichtung (36) zur Zerkleinerung des Grobguts aufweist.

12. Anlage nach Anspruch 11, wobei die Zerkleinerungseinrichtung (36) eine Mahleinrichtung (38) und einer der Mahleinrichtung (38) nachgeschaltete oder in diese integrierte Sichteinrichtung (40) aufweist und die Mahleinrichtung (38) mit dem Grobgutkühler (28) derart verbunden ist, dass Material von dem Grobgutkühler (28) in die Mahleinrichtung (38) geleitet wird und wobei die Sichteinrichtung (40) mit dem Feingutkühler (30) derart verbunden ist, dass Material von dem Feingutkühler (30) in die Sichteinrichtung (40) geleitet wird.

13. Verfahren zur Herstellung eines Bindemittels, insbesondere Zement, aufweisend zumindest die Schritte:
- thermisches Behandeln von Material in einem Ofen (18) und
- Kühlen des Materials in einer Kühleirichtung (20),
**dadurch gekennzeichnet, dass**
die Kühleinrichtung eine Klassierungseinrichtung umfasst und das Material in der Klassierungseinrichtung (26) in zumindest zwei Korngrößen, Grobgut und Feingut, klassiert wird,
wobei das Grobgut in einem Grobgutkühler (28) und das Feingut in einem Feingutkühler (28) im Anschluss an das Klassieren gekühlt wird.

14. Verfahren nach Anspruch 13, wobei das Klassieren durch einen Gasstrom erfolgt, sodass das Feingut von dem Grobgut getrennt wird.

15. Verfahren nach Anspruch 14, wobei die Geschwindigkeit des Gasstroms mittels Leitelementen (66, 68) erhöht wird.

## Claims

1. Installation for producing a binder, in particular cement, having a furnace (18) for thermally treating a material and having a cooling device (20) for cooling the material, which cooling device is arranged downstream of the furnace (18) in the flow direction of the material,
**characterized in that**
the cooling device (20) has a classifying device (26) for classifying the material into at least two grain sizes, coarse material and fine material, wherein a coarse-material cooler (28) for cooling the coarse material and a fine-material cooler (30) for cooling the fine material are arranged downstream of the classifying device (26).

2. Installation according to Claim 1, wherein the cooling device (20) has a cooler (22) for cooling material, which cooler is arranged upstream of the classifying device (24).

3. Installation according to either of the preceding claims, wherein the fine-material cooler (30) comprises a fluidized-bed cooler and/or a cyclone cooler.

4. Installation according to one of the preceding claims, wherein the coarse-material cooler (28) comprises a fixed-bed cooler.

5. Installation according to one of the preceding claims, wherein the classifying device (26) has at least one gas inlet (64) for the admission of a gas stream into the classifying device (26).

6. Installation according to one of the preceding claims, wherein the classifying device (26) has at least one gas vent (56, 58) for removing the fine material in the gas stream from the classifying device (26).

7. Installation according to Claim 5 or 6, wherein the classifying device (26) has, between the gas inlet (64) and the gas vent (56, 58), guide elements (66, 68) for guiding the material and/or the gas stream.

8. Installation according to one of Claims 5 to 7, wherein the classifying device (26) has, between the gas inlet and the gas vent, means through which gaseous media is able to flow and which, relative to the flow direction of the gas, have an angle of inclination.

9. Installation according to one of the preceding claims, wherein the installation has a breaker (24) which is arranged upstream of the classifying device (26) .

10. Installation according to Claim 9, wherein the breaker (24) is arranged between the gas inlet (64) and the gas vent (56, 58).

11. Installation according to one of the preceding claims, wherein the installation has a comminuting device (36) for comminuting the coarse material, which comminuting device is arranged downstream of the classifying device (26).

12. Installation according to Claim 11, wherein the comminuting device (36) has a grinding device (38) and a screening device (40) arranged downstream of the grinding device (38) or integrated therein, and the grinding device (38) is connected to the coarse-material cooler (28) such that material is guided into the grinding device (38) from the coarse-material cooler (28), and wherein the screening device (40) is connected to the fine-material cooler (30) such that material is guided into the screening device (40) from the fine-material cooler (30).

13. Method for producing a binder, in particular cement, comprising at least the steps of:
- thermally treating material in a furnace (18), and
- cooling the material in a cooling device (20),
**characterized in that**
the cooling device comprises a classifying device, and the material in the classifying device (26) is classified into at least two grain sizes, coarse material and fine material,
wherein, following the classification, the coarse material is cooled in a coarse-material cooler (28) and the fine material is cooled in a fine-material cooler (28).

14. Method according to Claim 13, wherein the classification is realized by way of a gas stream, such that the fine material is separated from the coarse material.

15. Method according to Claim 14, wherein the speed of the gas stream is increased by means of guide elements (66, 68).

## Revendications

1. Installation pour la préparation d'un liant, en particulier d'un ciment, présentant un four (18) pour le traitement thermique d'un matériau et un dispositif de refroidissement (20) monté en aval du four (18) dans la direction d'écoulement du matériau, pour refroidir le matériau,
**caractérisée en ce que**
le dispositif de refroidissement (20) présente un dispositif de tri (26) pour trier le matériau en au moins deux tailles de grains, la matière grossière et la matière fine, un refroidisseur de matière grossière (28) pour refroidir la matière grossière et un refroidisseur de matière fine (30) pour refroidir la matière fine étant montés en aval du dispositif de tri (26).

2. Installation selon la revendication 1, dans laquelle le dispositif de refroidissement (20) présente un refroidisseur (22) monté en amont du dispositif de tri (24) pour refroidir le matériau.

3. Installation selon l'une quelconque des revendications précédentes, dans laquelle le refroidisseur de matière fine (30) comprend un refroidisseur à lit fluidisé et/ou un refroidisseur à cyclone.

4. Installation selon l'une quelconque des revendications précédentes, dans laquelle le refroidisseur de matière grossière (28) comprend un refroidisseur à lit fixe.

5. Installation selon l'une quelconque des revendications précédentes, dans laquelle le dispositif de tri (26) présente au moins une entrée de gaz (64) pour l'introduction d'un flux de gaz dans le dispositif de tri (26).

6. Installation selon l'une quelconque des revendications précédentes, dans laquelle le dispositif de tri (26) présente au moins une évacuation de gaz (56, 58) pour évacuer la matière fine dans le flux de gaz hors du dispositif de tri (26) .

7. Installation selon les revendications 5 et 6, dans laquelle le dispositif de tri (26) présente, entre l'entrée de gaz (64) et l'évacuation de gaz (56, 58), des éléments conducteurs (66, 68) pour conduire le matériau et/ou le flux de gaz.

8. Installation selon l'une quelconque des revendications 5 à 7, dans laquelle le dispositif de tri (26) présente, entre l'entrée de gaz et l'évacuation de gaz, des moyens pouvant être parcourus par des milieux gazeux, qui présentent un angle d'incidence par rapport à la direction d'écoulement du gaz.

9. Installation selon l'une quelconque des revendications précédentes, l'installation présentant un concasseur (24) monté en amont du dispositif de tri (26).

10. Installation selon la revendication 9, dans laquelle le concasseur (24) est disposé entre l'entrée de gaz (64) et l'évacuation de gaz (56, 58) .

11. Installation selon l'une quelconque des revendications précédentes, l'installation présentant un dispositif de broyage (36) monté en aval du dispositif de tri (26) pour le broyage de la matière grossière.

12. Installation selon la revendication 11, dans laquelle le dispositif de broyage (36) présente un dispositif de pulvérisation (38) et un dispositif de criblage (40) monté en aval du dispositif de pulvérisation (38) ou intégré dans celui-ci et le dispositif de pulvérisation (38) est raccordé au refroidisseur de matière grossière (28) de telle sorte que le matériau provenant du refroidisseur de matière grossière (28) soit conduit dans le dispositif de pulvérisation (38) et le dispositif de criblage (40) étant raccordé au refroidisseur de matière fine (30) de telle sorte que le matériau provenant du refroidisseur de matière fine (30) soit conduit dans le dispositif de criblage (40).

13. Procédé de préparation d'un liant, en particulier de ciment, présentant au moins les étapes suivantes :
- traitement thermique de matériau dans un four (18) et
- refroidissement du matériau dans un dispositif de refroidissement (20),
**caractérisé en ce que**
le dispositif de refroidissement comprend un dispositif de tri et le matériau dans le dispositif de tri (26) est trié en au moins deux tailles de grains, une matière grossière et une matière fine,
la matière grossière étant refroidie dans un refroidisseur de matière grossière (28) et la matière fine étant refroidie dans un refroidisseur de matière fine (28) après le tri.

14. Procédé selon la revendication 13, dans lequel le tri s'effectue par un flux de gaz de sorte que la matière fine soit séparée de la matière grossière.

15. Procédé selon la revendication 14, dans lequel la vitesse du flux de gaz est augmentée au moyen d'éléments conducteurs (66, 68).
